# EUROPÄISCHE PATENTANMELDUNG

(11) **EP 1 182 620 A2**
(43) Veröffentlichungstag der Anmeldung: **27.02.2002**
(21) Anmeldenummer: 01119195.4
(22) Anmeldetag: 09.08.2001
(51) Int. Cl.: G07C 1/30

(54) **Vorrichtung zur Überwachung der Parkzeit**

(30) Priorität: 22.08.2000 DE 20014784 U
(71) Anmelder: Müller, Klaus, 24558 Henstedt/Ulzburg (DE)
(72) Erfinder: Müller, Klaus, 24558 Henstedt/Ulzburg (DE)
(74) Vertreter: Patentanwälte Hauck, Graalfs, Wehnert, Döring, Siemons

(57) **Zusammenfassung**

Vorrichtung zur Überwachung der Parkzeit, insbesondere eine Parkscheibe, mit einem Uhrwerk, das eine Funkuhr aufweist, und einem Gehäuse, das eine Anzeigeeinrichtung mit einer LCD-Anzeige für die Ankunftszeit und eine Betätigungseinrichtung aufweist, die auf ein Betätigungssignal ansprechend eine Anzeige der auf den aktuellen Zeitpunkt folgenden halben Stunde als Ankunftszeit auslöst, wobei
- eine Halteeinrichtung für das Gehäuse vorgesehen ist,
- die das Gehäuse in einer gut sichtbaren Zeigeposition halten kann und die mit der Betätigungseinrichtung derart zusammenwirkt, daß ein Anordnen des Gehäuses in der Zeigeposition das Betätigungssignal auslöst.

## Beschreibung

Die Erfindung betrifft eine Vorrichtung zur Überwachung der Parkzeit, insbesondere eine Parkscheibe.

Aus der OS 37 20 415 ist eine Parkscheibe mit einem herkömmlichen Uhrwerk und einer Digitalanzeige bekannt. Die Anzeigensteuerung wird durch einen Mikrotaster aktiviert. Durch Andrücken der Parkscheibe an die Fahrzeugscheibe wird der Mikroschalter betätigt und die Uhrzeit angezeigt. Bei einem Entfernen der automatischen Parkscheibe wird ebenfalls durch den gleichen mit dem Gehäuse verbundenen Mikrotaster die aktuelle Zeit wieder eingestellt. Eine solche Parkscheibe ist aus verschiedenen Gesichtspunkten nachteilig. Insbesondere erweist es sich als nachteilig, daß die Anzeigensteuerung durch Andrücken der Parkscheibe an die Fahrzeugscheibe aktiviert wird.

Aus der DE 42 07 236 A1 ist eine Parkscheibe für einen Kraftwagen bekannt, die automatisch und manipulationssicher die aktuelle Ankunftszeit beim Abstellen des Fahrzeugs einstellt. Hierbei wird eine Zeitskala mit einem durch eine Zeituhr gesteuerten Stelltrieb zum festen Einstellen des auf die Ankunftszeit folgenden halben Stundenstrichs eingestellt. Das Signal zum Einstellen wird infolge des Abstellens des Kraftwagens ausgelöst. Nachteilig an einer solchen Parkscheibe für einen Kraftwagen ist, daß eine Kopplung zwischen dem Kraftwagen und der Parkscheibe erforderlich ist, die aufwendig nachzurüsten ist.

Aus der DE 35 05 548 A1 ist eine Vorrichtung für ein Kraftfahrzeug zur Anzeige des Parkbeginnes bekannt. Die Vorrichtung besitzt eine elektrische Zeituhr, die die jeweils gültige Zeit auf halbe Stunden aufgerundet vorgibt und deren Zeitwert auf eine Anzeigevorrichtung übertragen wird. In DE 35 05 548 wird beschrieben, daß die Übertragung manuell gesteuert ist oder durch das Abschalten der Zündspannung ausgelöst wird. Auch an dieser Vorrichtung ist wieder die Kopplung an das Fahrzeug nachteilig, während die manuelle Steuerung der Übertragung sich als umständlich erwiesen hat.

Der Erfindung liegt die Aufgabe zugrunde, eine Vorrichtung zur Überwachung der Parkzeit bereitzustellen, die manipulationssicher und in zuverlässiger Weise die Anzeige der Ankunftszeit ermöglicht.

Die Aufgabe wird durch eine Vorrichtung mit den Merkmalen aus Anspruch 1 gelöst.

Die erfindungsgemäße Vorrichtung besitzt ein Uhrwerk und ein Gehäuse. Das Uhrwerk ist mit einer Funkuhr versehen. Das Gehäuse weist eine Anzeigeeinrichtung für die Ankunftszeit und eine Betätigungseinrichtung auf, wobei die Betätigungseinrichtung eine Anzeige der Ankunftszeit auslöst. Die Anzeigeeinrichtung ist mit einer LCD-Anzeige versehen. Die Ankunftszeit wird jeweils als die auf den aktuellen Zeitpunkt folgende halbe Stunde angezeigt. Die Einstellung der Ankunftszeit richtet sich hierbei nach der entsprechenden Vorschrift der Straßenverkehrsordnung, wonach die Ankunftszeit jeweils eine halbe oder eine volle Stunde beträgt. Selbstverständlich ist es möglich, die Ankunftszeit bei einer Änderung der Straßenverkehrsordnung auf einen anderen Zeittakt, beispielsweise auf einen ¼-Stundentakt, einzustellen. Eingestellt wird die Ankunftszeit durch ein Betätigungssignal auf das die Betätigungseinrichtung anspricht. Erfindungsgemäß ist eine Halteeinrichtung vorgesehen, die an einer gut sichtbaren Stelle für die Anzeigeeinrichtung angebracht werden kann. Die Halteeinrichtung ermöglicht es, das Gehäuse mit seiner Anzeige in einer Zeigeposition anzuordnen. Die Halteeinrichtung wirkt mit der Betätigungseinrichtung derart zusammen, daß ein Anordnen des Gehäuses in der Zeigeposition das Betätigungssignal auslöst. Im Gegensatz zum Stand der Technik wird also die Ankunftszeit an der erfindungsgemäßen Vorrichtung eingestellt, indem deren Gehäuse in eine Zeigeposition gebracht wird. Hierdurch wird vermieden, daß eine nicht auf die korrekte Ankunftszeit eingestellte Anzeige in die Zeigeposition gebracht wird. Die erfindungsgemäße Vorrichtung erfordert keine aufwendige Kopplung an das Kraftfahrzeug und seine elektrischen Schaltungen. Durch die Verwendung einer Funkuhr ist es möglich, daß Umstellungen von Sommer- auf Winterzeit durch die Vorrichtung korrekt erfaßt werden und stets eine genaue Zeitangabe erfolgt.

Die Anzeigeeinrichtung ist als LCD-Display in Form eines Sichtfensters einer Parkscheibe ausgebildet, insbesondere einer Parkscheibe gemäß Bild 291 der Straßenverkehrsordnung. Durch diese Ausgestaltung der Anzeigeeinrichtung als LCD-Display in Form eines streifenförmigen Kreisabschnitts wird sichergestellt, daß die erfindungsgemäße Vorrichtung als gültige Parkscheibe im Sinne der Straßenverkehrsordnung anerkannt wird. Die Form des Sichtfensters rührt daher, daß herkömmlich mechanische Parkscheiben eine drehbar gelagerte Scheibe aufweisen, die durch das Sichtfenster betrachtet werden kann. Diese Form wird durch das LCD-Display, das bevorzugt als temperaturbeständiges LCD-Display ausgebildet ist, nachempfunden.

Bevorzugt weist das Gehäuse die übliche Form einer Parkscheibe mit 110 mm Breite und 150 mm Höhe auf.

Zur Anordnung des Gehäuses in der Zeigeposition ist die Halteeinrichtung bevorzugt herstellerseitig als integraler Bestandteil in die Sonnenblende eingebaut, aus der es mit Hilfe eines Griffelements herumgeschoben werden kann. Ebenfalls kann das Gehäuse auch mit Befestigungsmitteln versehen sein. Solche Befestigungsmittel können beispielsweise Saugknöpfe, Klebestreifen und Riemen oder Bänder sein. Insgesamt ergeben sich folgende Möglichkeiten: Die erfindungsgemäße Vorrichtung kann direkt bei der Herstellung als integraler Bestandteil der Sonnenblende, als nachrüstbare Sonnenblende oder zur Nachrüstung an Sonnenblenden vorgesehen sein. Bei letzterer ist das Gehäuse mit Befestigungsmitteln, beispielsweise zur Befestigung an der Sonnenblende, ausgestattet sein.

In einer Ausgestaltung der erfindungsgemäßen Vorrichtung ist das Gehäuse in die Halteeinrichtung einsteckbar. Vorzugsweise können hierzu Schienen in der Halteeinrichtung vorgesehen sein, die das Gehäuse führen. Durch das Einstecken des Gehäuses in die Halteeinrichtung wird das Betätigungssignal ausgelöst, so daß die eingesteckte Vorrichtung die korrekte Ankunftszeit gut sichtbar anzeigt.

Bei einer alternativen Ausgestaltung der erfindungsgemäßen Vorrichtung ist die Halteeinrichtung mit zwei Klappen versehen, von denen eine das Gehäuse hält und die andere in dem Fahrzeuginnenraum befestigt werden kann. Mit einer solchen klappbaren Halteeinrichtung kann das Gehäuse in seine Zeigeposition geklappt werden. Die Klappe kann hierbei an der Stirn- oder der Längsseite des Gehäuses angelenkt sein.

Für eine weitere Ausgestaltung der erfindungsgemäßen Vorrichtung ist die Halteeinrichtung an einer Sonnenblende angeordnet, wobei das Gehäuse bei heruntergeklappter Sonnenblende in seine Zeigeposition entweder geschoben oder geklappt werden kann. Ein solches Haltemittel besitzt den Vorteil, daß bei hochgeklappter Sonnenblende das Gehäuse nicht die Sicht behindert. Ebenfalls ist es möglich, daß das Haltemittel an der zur Fahrzeugdecke weisenden Seite angeordnet ist und in Richtung der Windschutzscheibe in die Zeigeposition gezogen wird.

In einer vorteilhaften Weiterführung der erfindungsgemäßen Vorrichtung ist das Uhrwerk getrennt vom Gehäuse angeordnet und über Kontakte mit diesem verbunden, wobei die Verbindung zwischen Anzeigeeinrichtung und Uhrwerk in der Zeigeposition getrennt ist. Bei dieser Ausgestaltung der erfindungsgemäßen Vorrichtung wird Gehäuse und Uhrwerk entkoppelt, sobald sich das Gehäuse in der Zeigeposition befindet. Dies ermöglicht eine besonders flache Ausgestaltung des Gehäuses, da das Uhrwerk nicht in dieses integriert werden muß. Ebenso wird es möglich, ein bereits in einem Fahrzeug vorhandenes Uhrwerk für die erfindungsgemäße Vorrichtung zu verwenden.

In einer zweckmäßigen Weiterführung der Vorrichtung besitzt die Betätigungseinrichtung zusätzlich eine Taste, die eine Einstellung auf einen ¼-Stundentakt für die Anzeigeeinrichtung auslöst. Eine derartige Taste erlaubt es, die erfindungsgemäße Vorrichtung an eine Änderung der Straßenverkehrsordnung anzupassen.

Um Energie zu sparen, kann das Gehäuse in einer Ruheposition angeordnet werden, in der die Stromversorgung für die Anzeigeeinrichtung unterbrochen ist. Die Stromversorgung erfolgt vorzugsweise über am Gehäuse angeordnete Batterien.

Eine bevorzugte Ausführung der erfindungsgemäßen Vorrichtung wird anhand der nachfolgenden Figuren näher beschrieben. Es zeigt:
- Fig. eine: erfindungsgemäße Parkscheibe gemäß Bild 291 Straßenverkehrsordnung in der Ansicht von vorn,
- Fig. 2: eine schematische Querschnittsansicht einer an der Sonnenblende befestigten Parkscheibe, die in ihre Zeigeposition schiebbar ist,
- Fig. 3: eine schematische Querschnittsansicht einer an der Sonnenblende befestigten Parkscheibe, die in ihre Zeigeposition klappbar ist,
- Fig. 4: eine schematische Querschnittsansicht einer klappbaren Parkscheibe und
- Fig. 5: eine schematische Querschnittansicht einer an einer Sonnenblende befestigten Parkscheibe, die in ihre Zugposition schiebbar ist.

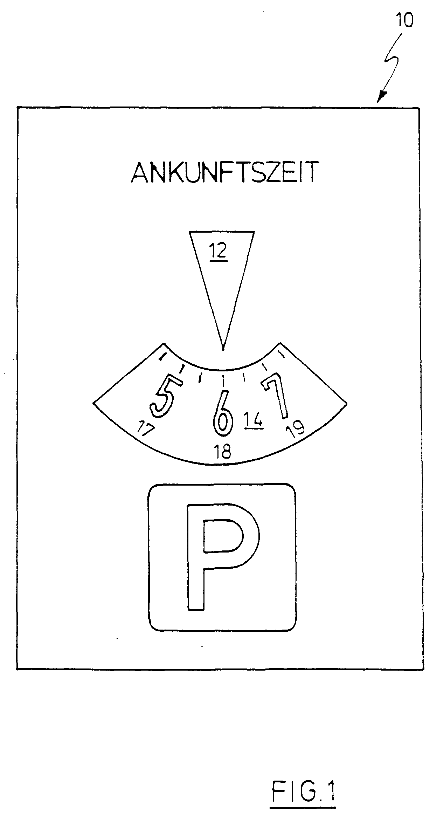

Fig. 1 zeigt eine Parkscheibe 10, die weiß auf blauem Grund bedruckt ist. Der Pfeil 12 weist auf die Ankunftszeit in der Anzeige 14. In dem dargestellten Ausführungsbeispiel ist die Anzeige 14 als ein LCD-Display ausgebildet. Der Pfeil 12 weist auf eine Ankunftszeit von 6.00 bzw. 18.00 Uhr. Die dargestellte Bildebene der Parkscheibe entspricht den durch die Straßenverkehrsordnung vorgegebenen Normen.

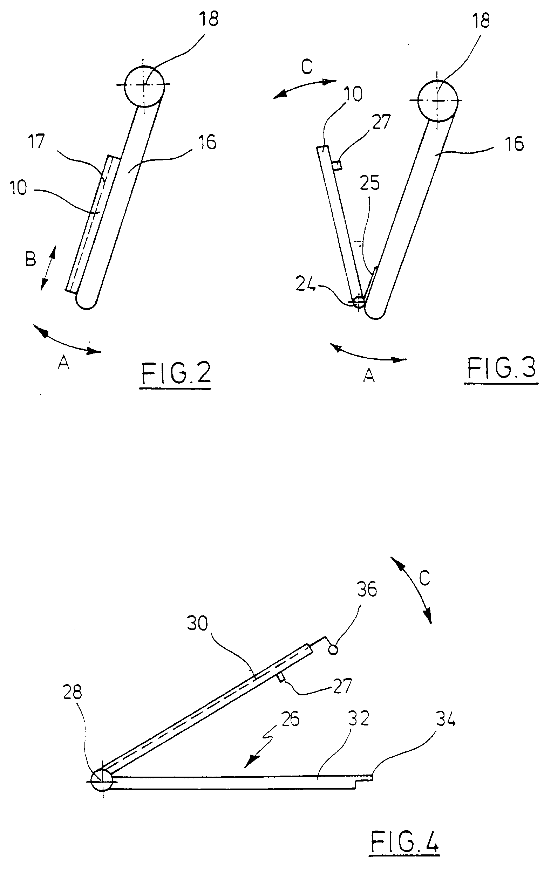

Fig. 2 zeigt die Anordnung der Parkscheibe 10 an einer Sonnenblende 16. In einer alternativen, hier nicht gezeigten Ausgestaltung ist das Gehäuse in der Sonnenblende angeordnet und kann aus dieser herausgezogen oder -geklappt werden. Die Sonnenblende 16 ist um die Achse 18 schwenkbar, wie durch den Doppelpfeil A angedeutet. Die Parkscheibe 10 ist an der Sonnenblende 16 mittels einer Halteeinrichtung befestigt, so daß die Parkscheibe entlang dem Doppelpfeil B verschoben werden kann. Die Halteeinrichtung weist zwei parallele Schienen 17 auf, in denen die Parkscheibe verschieblich gehalten ist. Befindet sich die Parkscheibe in ihrer vollständig ausgezogenen Position, so steht sie über den Rand des Sonnenblende 16 gut sichtbar vor (nicht dargestellt). Durch das Ausziehen der Parkscheibe 10 in der Halteeinrichtung wird ein aus dem Gehäuse vorstehender Stift betätigt, der das Anzeigen der auf die nächste halbe Stunde aufgerundeten Zeit als Ankunftszeit auslöst. Das Anzeigen kann beispielsweise auch durch einen aus der Parkscheibe vorstehenden Schalter ausgelöst werden, der in ausgezogener Position an der Halteeinrichtung anschlägt und so das Betätigungssignal auslöst.

Fig. 3 zeigt in einer schematischen Querschnittsansicht eine erfindungsgemäße Parkscheibe 10, die hinter der Sonnenschutzblende 16 befestigt ist. Die Parkscheibe 10 kann um ein Gelenk 24 ihrer Halteeinrichtung 25 geschwenkt werden, so wie durch den Doppelpfeil C angedeutet. In der vollständig hochgeklappten Position wird der Taster 27 gedrückt. Wird der Taster nicht gedrückt, zeigt die Parkscheibe 10 die korrekte Ankunftszeit an. Hierbei sind Sonnenblende und Parkscheibe derart dimensioniert, daß bei hochgeklappter Sonnenblende die Parkscheibe gegen die Sonnenblende gedrückt ist. Bei der in Fig. 3 dargestellten Parkscheibe 10 ist es möglich, die Parkscheibe ohne Uhrwerk auszubilden und ein Zeitsignal an das Gehäuse der Parkscheibe beispielsweise über in der Sonnenblende 16 vorgesehene Kontakte anzulegen.

Fig. 4 zeigt eine Parkscheibe in einer aufklappbaren Halteeinrichtung 26. Die Halteeinrichtung 26 besitzt ein Gelenk 28, an dem zwei Schienen 30 zur Aufnahme der Parkscheibe 10 angelenkt sind. Befestigt ist die Halteeinrichtung 26 mit einer Klappe 32, die zur Aufnahme der Parkscheibe 10 mit den Schienen 30 ausgebildet ist. Die Klappe 32 kann beispielsweise an eine Mittelkonsole im Fahrzeuginnenraum geklebt werden. Aus der Klappe 32 steht ein Vorsprung 34 vor. Das freie Ende der Schiene 30 ist mit einem Haken 36 versehen, der mit dem Vorsprung 34 zusammenwirkt. Im zusammengeklappten Zustand der Halteeinrichtung 26 ist der Schalter 27 eingedrückt. Haken 36 und Vorsprung 34 stellen dabei sicher, daß die Haltevorrichtung 26 vollständig zugeklappt ist.

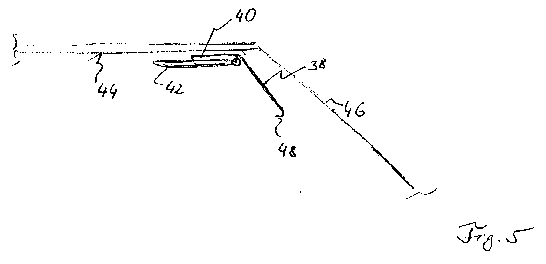

Fig. 5 zeigt eine Parkscheibe 38 in einer vorgezogenen Position. Die Parkscheibe 38 ist in der zurückgeschobenen Position in einer Halteeinrichtung 40 angeordnet, die mit der Sonnenblende 42 verbunden ist. Die Halteeinrichtung 40 ist im hochgeklappten Zustand der Sonnenblende 42 auf der zum Autodach 44 weisenden Seite von dieser angeordnet. Um die Parkscheibe 38 besser in die vorgezogene Position ziehen zu können, ist an der zur Windschutzscheibe 46 weisenden Seite ein hakenförmiger Griff 48 vorgesehen. In Fig. 5 ist die Parkscheibe 38 in der ausgezogenen Position dargestellt. Wird die Parkscheibe nicht benötigt, so wird diese beispielsweise an dem Griff 48 in Richtung der Windschutzscheibe 46 geklappt und in die Halteeinrichtung 40 zurückgeschoben. Die in Fig. 5 dargestellte Anordnung der Parkscheibe 38 kann ebenfalls bei einer in die Sonnenblende 42 integrierten Halteeinrichtung 40 vorgenommen werden. Bei dieser Ausgestaltung sind Halteeinrichtung und Gehäuse im Inneren der Sonnenblende angeordnet.

Alternativ zu dem aus der Sonnenblende vorstehenden Griff 48 kann die Sonnenblende ebenfalls mit einem in Längsrichtung verlaufenden Schlitz versehen sein, aus dem ein mit der Parkscheibe verbundenes Griffelements, beispielsweise ein Knopf, vorsteht. Durch Vorschieben des Griffelements wird die Parkscheibe in die Zeigeposition gebracht.

## Patentansprüche

1. Vorrichtung zur Überwachung der Parkzeit, insbesondere eine Parkscheibe, mit einem Uhrwerk, das eine Funkuhr aufweist, und einem Gehäuse, das eine Anzeigeeinrichtung (14) mit einer LCD-Anzeige für die Ankunftszeit und eine Betätigungseinrichtung aufweist, die auf ein Betätigungssignal ansprechend eine Anzeige der auf den aktuellen Zeitpunkt folgenden halben Stunde als Ankunftszeit auslöst, wobei
- eine Halteeinrichtung für das Gehäuse vorgesehen ist,
- die das Gehäuse in einer gut sichtbaren Zeigeposition halten kann und die mit der Betätigungseinrichtung derart zusammenwirkt, daß ein Anordnen des Gehäuses in der Zeigeposition das Betätigungssignal auslöst.

2. Vorrichtung nach Anspruch 1, **dadurch gekennzeichnet, daß** die Halteeinrichtung in eine Sonnenblende integriert ist und aus dieser das Gehäuse in die Zeigeposition herausgezogen oder -geklappt werden kann.

3. Vorrichtung nach Anspruch 1, **dadurch gekennzeichnet, daß** die Halteeinrichtung und das Gehäuse in einer Ruheposition vollständig in eine Sonnenblende integriert sind und über ein Griffelement in die Zeigeposition geschoben werden können.

4. Vorrichtung nach Anspruch 2 oder 3, **dadurch gekennzeichnet, daß** das Gehäuse in seine Zeigeposition gezogen oder geklappt werden kann.

5. Vorrichtung nach einem der Ansprüche 1 bis 4, **dadurch gekennzeichnet, daß** die Anzeigeeinrichtung als LCD-Anzeige in Form eines Sichtfensters einer Parkscheibe ausgebildet ist, insbesondere einer Parkscheibe gemäß Bild 291 der Straßenverkehrsordnung.

6. Vorrichtung nach Anspruch 5, **dadurch gekennzeichnet, daß** die LCD-Anzeige mit einem Anzeigefeld versehen ist, das temperaturbeständig ist, insbesondere bei Temperaturen, die durch Sonneneinstrahlung auf das Anzeigefeld entstehen.

7. Vorrichtung nach einem der Ansprüche 1 bis 6, **dadurch gekennzeichnet, daß** das Gehäuse eine rechteckige Grundfläche mit normgerechten Abmessungen aufweist.

8. Vorrichtung nach einem der Ansprüche 1 bis 7, **dadurch gekennzeichnet, daß** die Halteeinrichtung mit Befestigungsmitteln zur Befestigung in einem Fahrzeuginnenraum versehen ist.

9. Vorrichtung nach einem der Ansprüche 1 bis 8, **dadurch gekennzeichnet, daß** die Halteeinrichtung eine Ausnehmung aufweist, in die das Gehäuse einsteckbar ist., wobei die Halteeinrichtung vorzugsweise Schienen aufweist, in denen das Gehäuse geführt ist.

10. Vorrichtung nach einem der Ansprüche 1 bis 8, **dadurch gekennzeichnet, daß** die Halteeinrichtung zwei Klappen aufweist, von denen eine das Gehäuse hält und die andere in dem Fahrzeuginnenraum befestigt werden kann, wobei das Gehäuse in einem auf- oder abgeklappten Zustand in der Zeigeposition angeordnet ist.

11. Vorrichtung nach einem der Ansprüche 1 bis 8, **dadurch gekennzeichnet, daß** die Halteeinrichtung mit Befestigungsmitteln für eine Sonnenblende versehen ist und das Gehäuse bei heruntergeklappter oder hochgeklappter Sonnenblende in die Zeigeposition entweder gezogen oder geklappt werden kann.

12. Vorrichtung nach einem der Ansprüche 1 bis 11, **dadurch gekennzeichnet, daß** das Uhrwerk außerhalb des Gehäuses angeordnet und über elektrische Kontakte mit der Betätigungseinrichtung und/oder der Anzeigeeinrichtung verbunden ist, wobei die Verbindung zu dem Uhrwerk in der Zeigeposition getrennt ist.

13. Vorrichtung nach einem der Ansprüche 1 bis 12, **dadurch gekennzeichnet, daß** die Betätigungseinrichtung zusätzlich eine Taste aufweist, mit deren Hilfe einstellbar ist, daß als Ankunftszeit die auf den aktuellen Zeitpunkt folgende ¼ Stunde angezeigt wird.

14. Vorrichtung nach einem der Ansprüche 5 bis 13, **dadurch gekennzeichnet, daß** die Halteeinrichtung eine Ruheposition für das Gehäuse besitzt, in der die Anzeigeeinrichtung ausgeschaltet ist.

15. Vorrichtung nach einem der Ansprüche 1 bis 14, **dadurch gekennzeichnet, daß** als Stromversorgung eine Batterie vorgesehen ist.
